# EUROPEAN PATENT SPECIFICATION

(11) **EP 3 249 240 B1**
(45) Date of publication and mention of the grant of the patent: **06.05.2020**
(21) Application number: 17171850.5
(22) Date of filing: 19.05.2017
(51) Int. Cl.: F15B 1/22, F15B 15/14

(54) **ASSEMBLY COMPRISING A CYLINDER AND AN ADAPTER FOR MOUNTING THE CYLINDER FOR A FLUID POWERED LINEAR ACTUATOR TO A FLUID CHANNEL**
VORRICHTUNG MIT EINEM ZYLINDER UND EINEM ADAPTER ZUR MONTAGE DES ZYLINDERS FÜR EINEN FLUIDBETÄTIGTEN LINEARANTRIEB AN EINEM FLÜSSIGKEITSKANAL
ENSEMBLE COMPRENNANT UN CYLINDRE ET ADAPTATEUR POUR LE MONTAGE DE LE CYLINDRE D'UN ACTIONNEUR LINÉAIRE ENTRAÎNÉ PAR FLUIDE SUR UN CANAL DE FLUIDE

(30) Priority: 20.05.2016 US 201615160319
(43) Date of publication of application: 29.11.2017
(73) Proprietor: Gustav Klauke GmbH, 42855 Remscheid (DE); Greenlee Textron Inc., Rockford, Illinois 61109 (US)
(72) Inventor: TULLY, Gerald Jonathan, Hampshire, IL 60140 (US); FRENKEN, Egbert Georg Gottfried, 52525 Heinsberg (DE)
(74) Representative: Müller, Enno

(56) References cited:
- DE-B- 1 186 747
- DE-U1-202011 052 083
- FR-A1- 2 796 673
- GB-A- 2 153 436
- US-A- 6 044 752

## Description

### FIELD OF THE DISCLOSURE

The present disclosure relates to an adapter capable of mounting a cylinder for a fluid powered linear actuator to a fluid channel.

### BACKGROUND

An adapter is used to mount a cylinder used for a linear actuator on a relative to a fluid channel, which may allow the cylinder and fluid channel to rotate up to 360-degrees relative to each other. Cylinder inlets can often be difficult to design because of requirements that minimize size and weight leading to material reduction. The highest stress is often concentrated on cylinder designs at the inlet. This is especially the case with single acting cylinders with the inlet located on the rod side of the cylinder, or a pull cylinder, which is often preferred for hole making applications. High pressure cylinders where sealing methods must be more robust, also cause complications because maintaining the seal combined with joint integrity is even more challenging. Because of this high stress area created at the cylinder inlet, and thus deformation causing expansion and contraction, it can be difficult to find a permanent attachment for the cylinder housing that will be strong and not loosen over time, while maintaining a good inlet seal. Threaded applications tend to loosen and work themselves loose, and any internal locking mechanisms that are used internal to the cylinder design in the pressurized area, like pressed pins or snap rings, either increase stress problems or make assembly overly complicated and cost prohibitive.

US 6 044 752 A discloses an adaptor mounted to a cylinder which has a passageway open concerning the outer directed first end. This first end has no further continuation of the passageway.

Starting from the state of the art as mentioned, the invention has the object to provide an assembly with an adaptor having the possibility to provide fluid into the cylinder in an advantageous manner.

This object is solved through the features of claim 1.

Provided is an assembly comprising a cylinder having a wall forming a fluid inlet passageway and a wall forming a fastener receiving passageway, the fastener receiving passageway being in communication with the fluid inlet passageway; an adaptor comprising a wall having a proximal end and a distal end, the wall including a first portion adapted to mount to an associated source of a fluid medium and extending from the proximal end, a second portion adapted to be engaged with an associated tool which can apply a torque to the adaptor, the second portion extending from the first portion, a third portion extending from the second portion, the third portion seated within the fluid inlet passageway of the cylinder and sealed to the wall forming the fluid inlet passageway by a seal, and a fluid passageway extending through the adaptor and in communication with the fluid inlet passageway of the cylinder; and a fastener mounted in the fastener receiving passageway and in engagement with the third portion of the adaptor, the seal being distal to the fastener, wherein the passageway has a first part and a second part, the first part has a first end and does extend along a centerline of the adaptor. The focus is on the first end being within a second reduced diameter wall section of the first portion which is a fluid channel mounting portion, and spaced from the proximal end of the adaptor, that the passageway extends through the second portion and through the third portion, that the passageway terminates at a second end which is at a second end of the adaptor and that the second part is in fluid communication with the first part proximate to the first end.

### SUMMARY

The adaptor is formed of a unitary wall including a cylinder and the adaptor are provided. The adaptor is used to mount the cylinder to a fluid channel. The adaptor is formed of a unitary wall including a first portion adapted to mount to the fluid channel, a second portion adapted to be engaged with a tool extending from the first portion, and a third portion extending from the second portion and seated within an inlet passageway of the cylinder. The third portion includes locking features for locking the adaptor to the cylinder, and a sealing feature for sealing the adaptor to the cylinder. The sealing feature is distal to the second portion such that when a torque is applied to the adaptor, the sealing feature does not cause the adaptor to shear. The cylinder and fluid channel may be capable of being swiveled relative to each other around the adaptor, such swiveling may be between 0 degree and 360 degrees, may be 360 degrees, and may be more than 360 degrees. Alternatively, in some embodiments, the fluid channel may be fixed in position relative to the adapter.

This Summary is provided merely for purposes of summarizing some example embodiments so as to provide a basic understanding of some aspects of the disclosure. Accordingly, it will be appreciated that the above described example embodiments are merely examples and should not be construed to narrow the scope of the disclosure in any way. Other embodiments, aspects, and advantages of various disclosed embodiments will become apparent from the following detailed description taken in conjunction with the accompanying drawings which illustrate, by way of example, the principles of the described embodiments.

### BRIEF DESCRIPTION OF THE DRAWINGS

The organization and manner of the structure and operation of the disclosed embodiments, together with further objects and advantages thereof, may best be understood by reference to the following description, taken in connection with the accompanying drawings, which are not necessarily drawn to scale, wherein like reference numerals identify like elements in which:

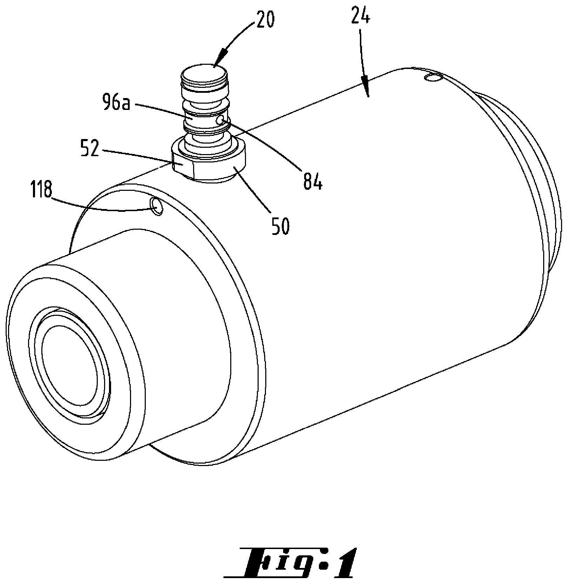

FIG. 1 is a perspective view of an adapter and a cylinder which incorporates features of the present disclosure;
FIG. 2 is a cross-sectional view of the adapter and cylinder, and also showing a fluid channel in communication with a source of fluid medium under pressure;
FIG. 3 is a side elevation view of the adapter;
FIG. 4 is a cross-sectional view of the adapter;
FIG. 5 is a cross-sectional view of an inlet passageway of the cylinder;
FIG. 6 is a cross-sectional view of the adapter and the inlet passageway of the cylinder;
FIG. 7 is a cross-sectional view of an alternate adapter;
FIG. 8 is a cross-sectional view of the adapter of FIG. 7 and the inlet passageway of the cylinder;
FIG. 9 is a cross-sectional view of another alternate adapter;
FIG. 10 is a cross-sectional view of an alternate inlet passageway of the cylinder to be used with the adapter of FIG. 9;
FIG. 11 is a cross-sectional view of the adapter of FIG. 9 and the inlet passageway of FIG. 10;
FIG. 12 is a perspective view of a modified cylinder; and
FIG. 13 is a side elevation view of the modified cylinder of FIG. 12.

### DETAILED DESCRIPTION

While the disclosure may be susceptible to embodiment in different forms, there is shown in the drawings, and herein will be described in detail, a specific embodiment with the understanding that the present disclosure is to be considered an exemplification of the principles of the disclosure, and is not intended to limit the disclosure to that as illustrated and described herein. Therefore, unless otherwise noted, features disclosed herein may be combined together to form additional combinations that were not otherwise shown for purposes of brevity. It will be further appreciated that in some embodiments, one or more elements illustrated by way of example in a drawing(s) may be eliminated and/or substituted with alternative elements within the scope of the disclosure.

An adapter 20 is provided and is used to mount a fluid channel 22 to a cylinder 24 used for a linear actuator (not shown). The cylinder 24 and fluid channel 22 of some embodiments may be capable of being swiveled relative to each other around the adaptor 20. The extent of swiveling permitted in such embodiments may vary depending on embodiment, with any upper maximum degree of rotation being between 0 and 360 degrees, and may be up to 360 degrees, and in some embodiments, more than 360 degrees of swiveling may be permitted. Alternatively, in some embodiments, the fluid channel 22 may be fixed in position relative to the adapter 20. The fluid channel 22 receives a fluid medium under pressure from a source 26. The adapter 20 is designed such that its size and weight are minimized. The fluid medium can be hydraulic fluid, pneumatic fluid or other fluids.

The adapter 20 is formed of a unitary wall 28 and may be formed of metal. The wall 28 includes a first or proximal end 30, a fluid channel mounting portion 32 extending from the first end 30, a tool engaging portion 34 extending from the fluid channel mounting portion 32, a cylinder engaging portion 36 extending from the tool engaging portion 34 to a second or distal end 38 of the wall 28. A centerline 29 of the wall 28 is defined between the ends 30, 38. The fluid channel mounting portion 32 engages with the fluid channel 22 as described herein. The cylinder engaging portion 36 engages with the cylinder 24 as described herein.

As shown, the fluid channel mounting portion 32 includes a wall portion 40 which is cylindrical and defines a first diameter. As shown, a snap-ring recess 42 is provided in the wall portion 40 proximate to, but spaced from, the first end 28 of the wall 28. The snap-ring recess 42 may extend around the entire perimeter of the wall portion 40 or may extend around a portion of the perimeter of the wall portion 40. A first recess 44 is provided in the wall portion 40 proximate to, but spaced from, the snap-ring recess 42 and forms a first reduced diameter wall section 44a of the wall portion 40. The first recess 44 extends around the entire perimeter of the wall portion 40. The first reduced diameter wall section 44a defines a diameter which is less than the diameter of the wall portion 40. A second recess 46 is provided in the wall portion 40 proximate to, but spaced from, the first recess 44 and forms a second reduced diameter wall section 46a of the wall portion 40. The second recess 46 extends around the entire perimeter of the wall portion 40. The second reduced diameter wall section 46a defines a diameter which is less than the diameter of the wall portion 40, and greater than the first reduced diameter wall section 44a, however, the diameter of the second reduced diameter wall section 46a may be the same as the diameter of the first reduced diameter wall section 44a. A third recess 48 is provided in the wall portion 40 proximate to, but spaced from, the second recess 46 and forms a third reduced diameter wall section 48a of the wall portion 40. The third recess 48 extends around the entire perimeter of the wall portion 40. The third reduced diameter wall section 48a defines a diameter which is less than the diameter of the wall portion 40, and may be the same as the diameter of the first reduced diameter wall section 44a. While a particular fluid channel mounting portion 32 is shown and described, it is to be understood that other structures for mounting the fluid channel 22 are within the scope of the present disclosure.

The tool engaging portion 34 is formed of a wall having arcuate wall portions 50 interposed with flat wall portions 52. The flat wall portions 52 are opposed. The arcuate wall portions 50 define a diameter which is greater than the diameter of the wall portion 40 of the fluid channel mounting portion 32. A tool (not shown) can engage the flat wall portions 52 to rotate the adapter 20 relative to the cylinder 24. Other tool engaging structures can be provided.

The cylinder engaging portion 36 includes a first wall 54 which is cylindrical and defines a first diameter which extends from the tool engaging portion 34, a second wall 56 which is conical and extends from the first wall 54, a third wall 70 which is cylindrical and extends from the second wall 56 has a diameter which is less than the first wall 54, a fourth wall 72 which is conical and extends from the third wall 70, and a fifth wall 74 which is cylindrical and extends from the fourth wall 72 and has a diameter which is less than the third wall 70. The fourth wall 72 ends at the second end 38 of the wall 28. A recess 76 is provided in the fifth wall 74 proximate to, but spaced from, the second end 38 and forms a reduced diameter wall section 76a of the fifth wall 74. The recess 76 extends around the entire perimeter of the fifth wall 74. The reduced diameter wall section 76a defines a diameter which is less than the diameter of the fifth wall 74. The conical fourth wall 72 is angled relative to the third and fifth walls 70, 74 at a 60-degree angle. The angle at which the conical fourth wall 72 is angled relative to the third and fifth walls 70, 74 is greater than the angle at which the conical second wall 56 is angled relative to the third and fifth walls 70, 74. The second conical wall 56 may be eliminated such that the third wall 70 extends directly from the first wall 54.

The first wall 54 includes locking features as described herein to lock the adapter 20 to the cylinder 24. The fourth wall 72 forms a seat as described herein with the cylinder 24. The fifth wall 74 has a sealing feature as described herein to seal the adapter 20 to the cylinder 24. The sealing feature is spaced distally from the locking feature and from the tool engaging portion 34, such that when a torque is applied to the tool engaging portion 34, the sealing feature does not cause the adapter 20 to shear.

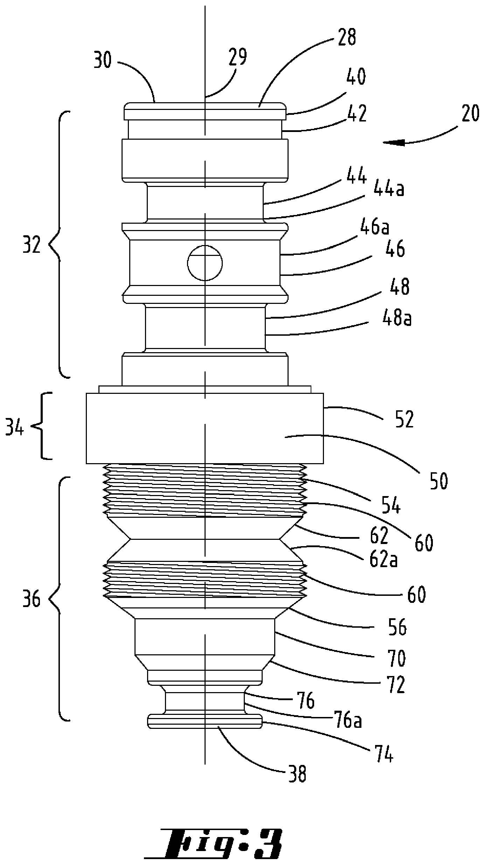

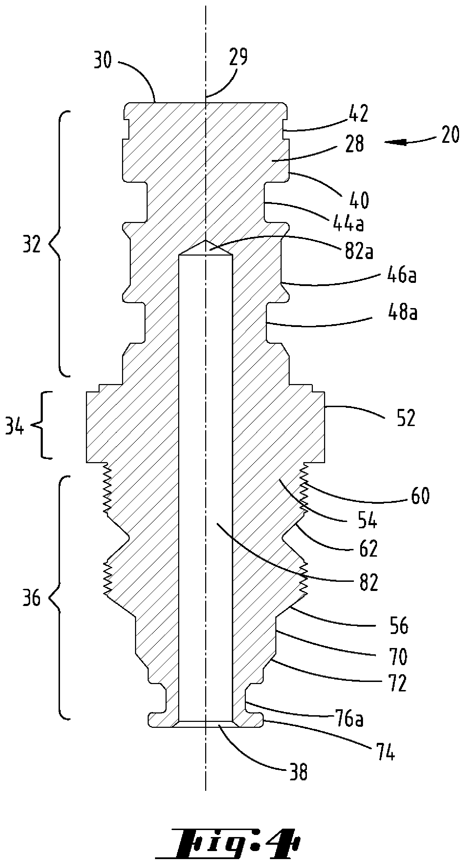

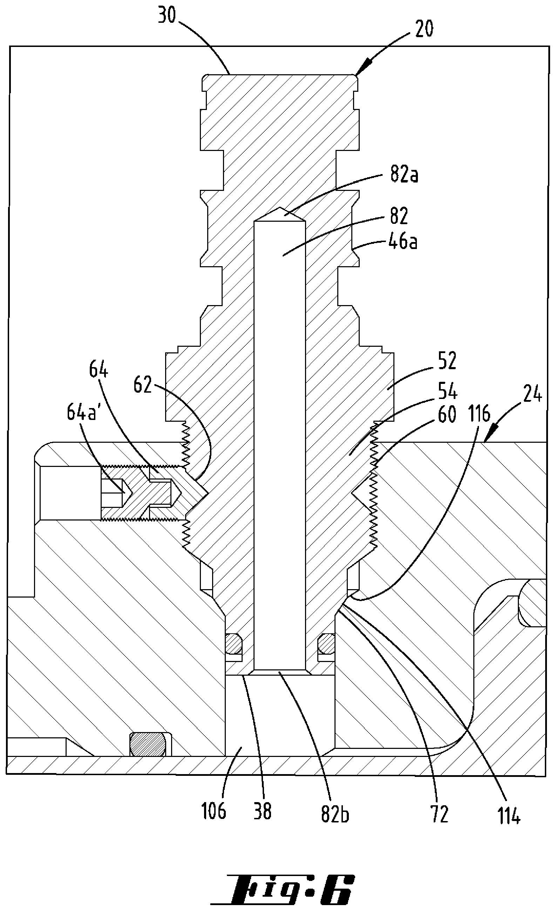

In an embodiment as shown in FIGS. 3 and 4, the first wall 54 is threaded with threads 60 and has a groove 62 provided therein which is spaced from the tool engaging portion 34 and which forms a reduced diameter wall section 62a of the first wall 54. The groove 62 may extend around the entire perimeter of the first wall 54 or may extend around a portion of the perimeter of the first wall 54. The reduced diameter wall section 62a defines a diameter which is less than the minor diameter of the threads 60. As shown in FIG. 6, the fastener 64 seats within the groove 62 as described herein and forms a locking feature. The groove 62 may be formed by machining. In this embodiment, the load caused by pressure pushing the adaptor 20 relative to the cylinder 24 is transferred to adapter 20, which transfers the load directly back to cylinder 24.

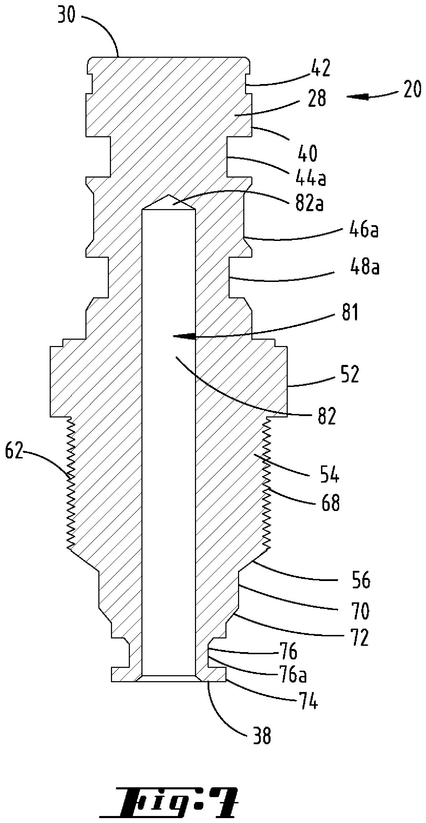

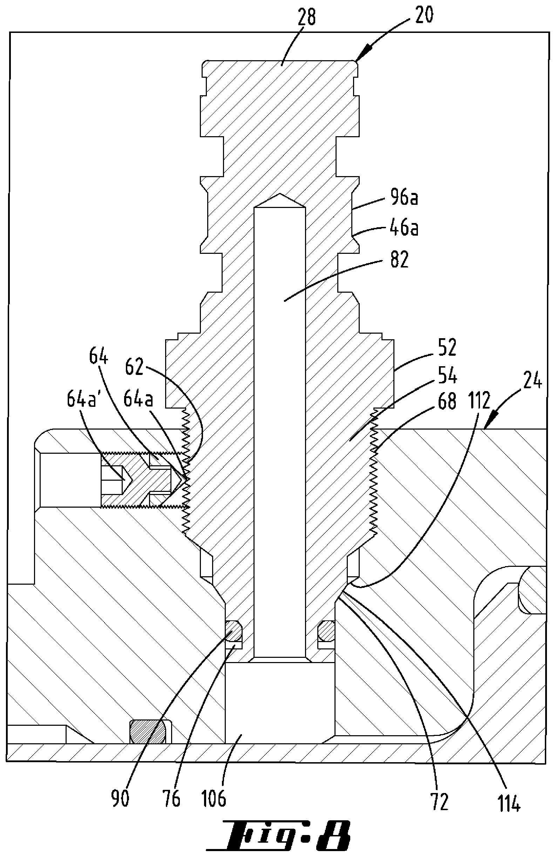

In an embodiment as shown in FIG. 7, the first wall 54 is threaded with threads 68 which form the groove 62. As shown in FIG. 8, the fastener 64 engages within the root between adjacent threads 60 as described herein and forms a locking feature. The root of the thread 60 in which the fastener 64 engages forms the groove 62. In this embodiment, the load caused by pressure pushing the adaptor 20 relative to the cylinder 24 is transferred to adapter 20, which transfers the load directly back to cylinder 24.

A compression seal 88 seats within the first recess 44; an elastomeric compression seal 90 seats within the third recess 48; and an elastomeric compression seal 92 seats within the recess 76 of the fifth wall 74. Each compression seal 88, 90 has an outer diameter that is greater than the wall portion 40 such that the compression seals 88, 90 extend outwardly from the wall portion 40 in an uncompressed condition. The compression seal 92 has an outer diameter that is greater than the fifth wall 74 such that the compression seal 92 extends outwardly from the fifth wall 74 in an uncompressed condition. Each compression seal 88, 90, 92 may be formed of an elastomeric O-ring or other suitable compressible bladder and the like.

The adaptor 20 includes a passageway 81 having a first part 82 and a second part 84. The first part 82 has a first end 82a which is within the second reduced diameter wall section 46a of the fluid channel mounting portion 32 and spaced from the first end 30 of the adaptor 20, and which extends through the tool engaging portion 34 and through the cylinder engaging portion 36, and terminates at a second end 82b which is at the second end 38 of the adaptor 20. The first part 82 extends along the centerline 29 of the adapter 20. The second part 84 is provided through the second reduced diameter wall section 46a and is in fluid communication with the first part 82 proximate to its first end 82a.

The fluid channel 22 has a body 86, which may be formed of metal, having first and second ends 88, 90. The body 86 may be cylindrical. A passageway 94 extends axially through a part of the body 86. The passageway 94 has a first end 94a at the first end 88 of the body 86 and a second end 94b which is proximate to, but spaced from, the second end 90 of the body 86. A through bore 98 is provided through the body 86, is transverse to the passageway 94 and is formed by a wall. The through bore 98 is in fluid communication with the second end 94b of the passageway 94. The wall forming the through bore 98 is cylindrical and defines a diameter which is slightly larger than the outer diameter of the wall portion 40 of the adapter 20.

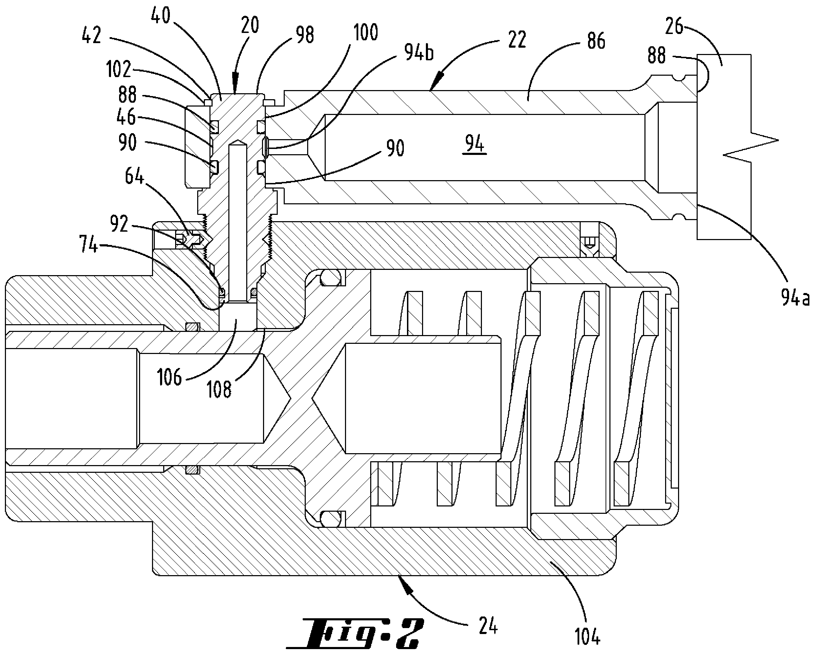

The fluid channel mounting portion 32 of the adapter 20 seats through the through bore 98, with the snap-ring recess 42 extending outwardly from a first side of the body 86 and the tool engaging portion 34 and cylinder engaging portion 36 extending from an opposite second side of the body 86. A snap-ring 102, see FIG. 2, seats within the snap-ring recess 42 and engages with the side of the body 86 to prevent the removal of the adapter 20 from the fluid channel 22. The second recess 46 aligns with the second end 94b of the passageway 94 of the fluid channel 22. The compression seals 88, 90 engage with the wall forming the through bore 98 to form a fluid-tight seal between the adapter 20 and the fluid channel 22 and fluidically isolating the second recess 46 from the remainder of the through bore 98. The cylinder 24 and fluid channel 22 may be capable of being swiveled or rotated relative to each other around the adaptor 20, with any upper maximum degree of rotation being between 0 and 360 degrees, and may be up to 360 degrees, and in some embodiments, more than 360 degrees of swiveling may be permitted, with the compression seals 88, 90 maintaining a fluid tight seal between the adapter 20 and the fluid channel 22 during the rotation. The snap-ring 102 allows for the rotation. The fluid channel 22 may be fixed in position relative to the adapter 20 by the fluid channel mounting portion 32 (for example a set screw (not shown) fixes the position) such that the fluid channel 22 is not capable of rotation. While a snap-ring 102 and associated snap-ring recess 42 are described herein, other structures for affixing the fluid channel 22 to the adaptor 20 are within the scope of this disclosure. For example, but not limited to, a bolt could be provided which extends through the fluid channel 22 and engages with the adaptor 20 to affix the fluid channel 22 and adaptor 20 together.

The cylinder 24 includes a body 104, which may be formed of metal, having an inlet passageway 106 into which the adapter 20 is seated as described herein. The inlet passageway 106 is in fluid communication with an axial passageway 108 in which the actuating components within the cylinder 24 are mounted. The cylinder 24 may take a variety of forms. For example, the cylinder 24 may be a single acting cylinder, having the inlet passageway 106 located on a rod side of the body 104, or a pull cylinder which is often preferred for hole making applications. The cylinder 24 is used to actuate a tool (not shown), such as a crimper, a punch, etc.

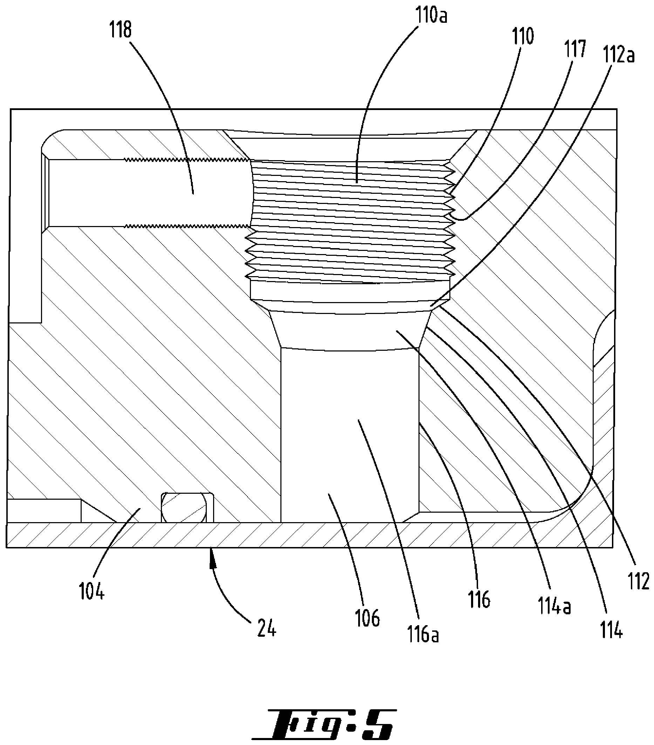

As best shown in FIG. 5, the inlet passageway 106 is formed by a first wall section 110 which forms a first part 110a of the inlet passageway 106, the first wall section 110 being cylindrical, a second wall section 112 which forms a second part 112a of the inlet passageway 106, which extends from the first wall section 110 and is conical, a third wall section 114 which forms a third part 114a of the inlet passageway 106, which extends from the second wall section 112 and is conical, and a fourth wall section 116 which forms a fourth part 116a of the inlet passageway 106, which extends from the third wall section 114 and is cylindrical. The first wall section 112 is threaded with threads 117 and defines a diameter which is greater than the diameter defined by the fourth wall section 116. The conical third wall section 114 is angled relative to the first and fourth wall sections 110, 116 at a 60-degree angle. The angle at which the conical third wall section 116 is angled relative to the first and fourth wall sections 110, 116 is greater than the angle at which the conical second wall section 112 is angled relative to the first and fourth wall sections 110, 116.

The body 104 includes a fastener receiving passageway 118 which is angled relative to the inlet passageway 106 and is in communication with the inlet passageway 106. The fastener receiving passageway 118 may be transverse to or parallel to the axial passageway 108 of the cylinder 24. The fastener receiving passageway 118 may be tangential or off-center relative to the cylinder 24.

The adapter 20 is mounted into the inlet passageway 106 by threading the first wall 54 of the adapter 20 into the first wall section 110 of the cylinder 24 by using a tool, such as a wrench, to engage the flat wall portions 52 of the tool engaging portion 34, until the fourth wall 72 of the adapter 20 engages with the third wall section 114. This engagement of the fourth wall 72 and the third wall section 114 forms a seat to prevent the further insertion of the adapter 20 into the cylinder 24. The threaded engagement of the first wall 54 and first wall section 110 and the abutting engagement of the fourth wall 72 and the third wall section 114 form a joint between the adapter 20 and the cylinder 24. The fourth wall section 116 of the cylinder 24 is sized to be slightly larger than the fifth wall 74 of the adapter 20. When the adaptor 20 is seated in the inlet passageway 106 of the cylinder 24, the fifth wall 74 is proximate to the fourth wall section 116 and the compression seal 92 forms a fluid tight seal between the adapter 20 and the cylinder 24. The sealing compression seal 92 is distal to the joint and the seat formed between the adapter 20 and the cylinder 24.

Torque is applied to the adapter 20 by rotation of the adapter 20 using the tool on the flat wall portions 52. This torque translates to the seat formed by the engagement of the fourth wall 72 and the third wall section 114 through the threads 60, 117. Since the compression seal 92 is distal and separate from the torqued portion of the joint between the adapter 20 and the cylinder 24, this allows for high torqueing and a greater shear area because the larger diameter first wall 54 of the adapter 20 which has the threads 60 is not grooved for a compression seal for sealing the adaptor 20 to the cylinder 24. In addition, the design allows the compression seal 92 to be made very small, therefore minimizing force on the adapter 20 due to the internal pressure of the fluid medium within the cylinder 24.

After the adapter 20 is seated within the cylinder 24, the fastener 64, such as a set screw, is seated within the fastener receiving passageway 118 and the end 64a of the fastener 64 engages within the groove 62, FIG. 6, or between crests and within a root of the thread 68, FIG. 6, to form a positive lock between the fastener 64, the cylinder 24 and the adaptor 20. While a set screw is shown, it is to be understood that other structures for creating a positive lock can be provided, for example, a pin. The positive lock created by the fastener 64 prevents the adapter 20 from loosening from the body 104 of the cylinder 24. It is not possible for the adapter 20 to loosen when the fastener 64 is mated with the adapter 20, however, if desired, a second fastener 64a' may be used to lock the first fastener 64 in place as another contingency. As an alternative, the fastener 64 may be press-fit into the fastener receiving passageway 118, may be adhesively secured within the fastener receiving passageway 118, and the like such that the easy removal of the fastener 64 is prevented. The threaded engagement of the first wall 54 of the adapter 20 and the first wall section 110 of the cylinder 24 provide an additional lock feature.

In use, the cylinder 24 receives a fluid medium, such as hydraulic oil, from the source 26, through the fluid channel 22 and the adapter 20. The fluid medium flows through the fluid channel passageway 94, through the fluid channel through bore 98, into the second recess 46 of the adapter 20, through the second part 84 of the passageway 81, through the first part 82 of the passageway 81, into the inlet passageway 106 of the cylinder 24, and then into the axial passageway 108 of the cylinder 24 to actuate the mechanisms within the cylinder 24. The fluid medium is pumped from the source under high pressure either by a motor or by hand.

Because of the design of the adapter 20, the high stress which is concentrated on cylinder 22 at the inlet passageway 106 does not affect the adapter 20. The adapter 20 includes multiple contingent locking mechanisms, combined with a seal configuration that maintains robustness and strength in the joint between the adapter 20 and the cylinder 22. The diameters of the adapter 20 accommodate expected shear strengths due to external and internal loads and installation torque, while maintaining a large enough fluid path through the center to supply fluid medium to the cylinder 24.

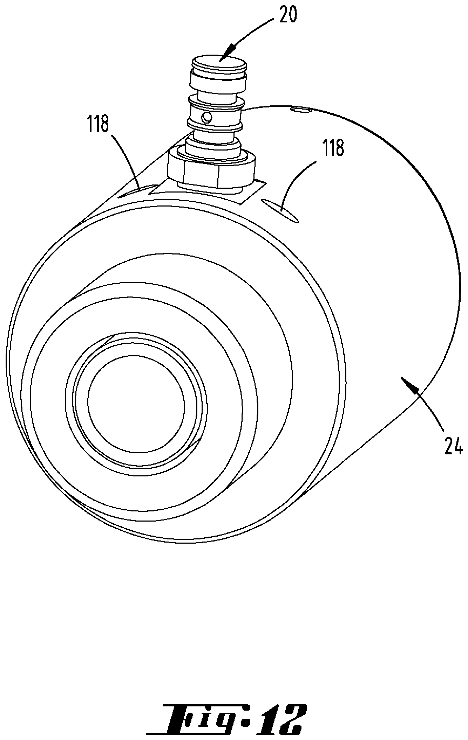

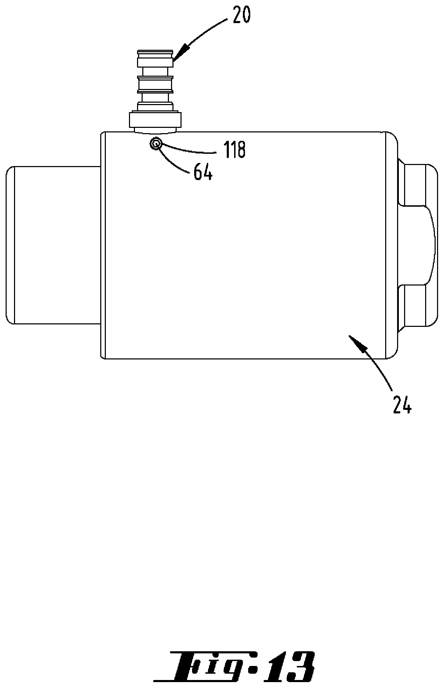

As shown in FIGS. 12 and 13, two fastener receiving passageways 118 are provided and the fastener receiving passageways are diametrically opposed from each other. The fastener receiving passageways 118 can be positioned in other positions than being diametrically opposed. The fastener receiving passageways 118 are angled relative to the axial passageway 108 of the cylinder 24. The fastener receiving passageways 118 may be perpendicular to the axial passageway 108, or tangential or off-center relative to the adapter 20. A fastener 64, such as a set screw, is engaged within each passageway 118. With the embodiment shown in FIG. 3, an end 64a of each fastener 64 engages within the respective groove 62. With the embodiment shown in FIG. 7, an end 64a of each fastener 64 engages between crests of the thread 68, e.g., the ends 64a of the fasteners 64 engage within the root of the thread 68. The fastener 64 may be threadedly engaged with the fastener receiving passageway 118 as shown in the drawings, may be press-fit into the fastener receiving passageway 118, may be adhesively secured within the fastener receiving passageway 118, and the like such that the easy removal of the fastener 64 is prevented. While a set screw is shown, it is to be understood that other structures for creating a positive lock can be provided, for example, a pin. The positive lock created by the fastener 64 prevents the adapter 20 loosening from the body 104 of the cylinder 24. While two fastener receiving passageways 118 and fasteners 62 are shown in FIGS. 12 and 13, it is to be understood that more than two fastener receiving passageways 118 and fasteners 62 can be provided.

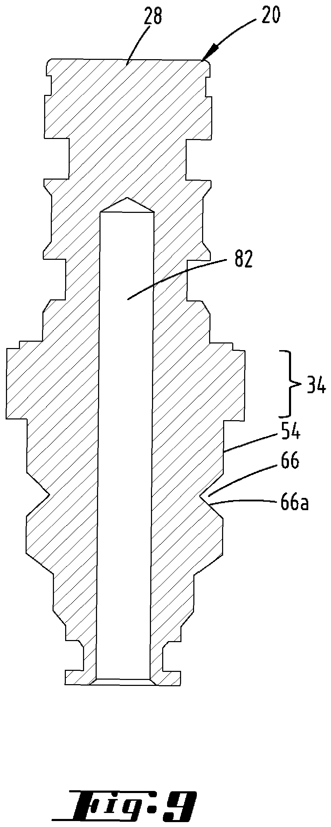

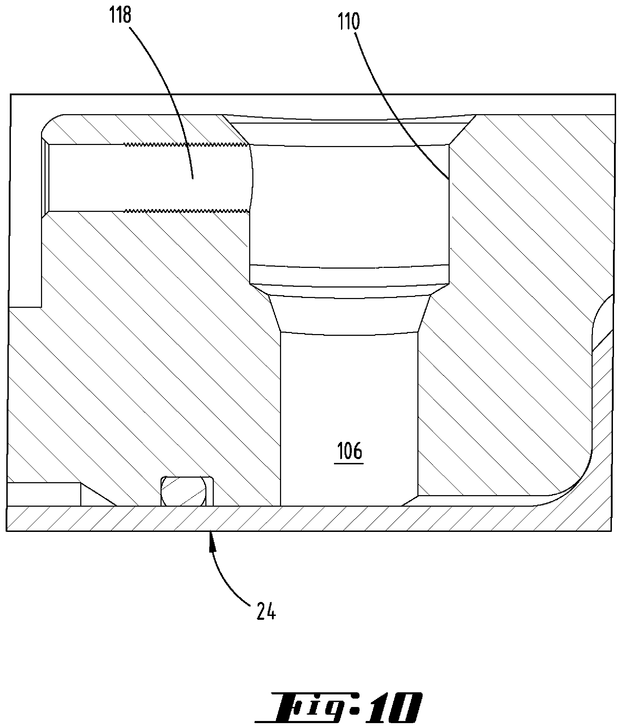

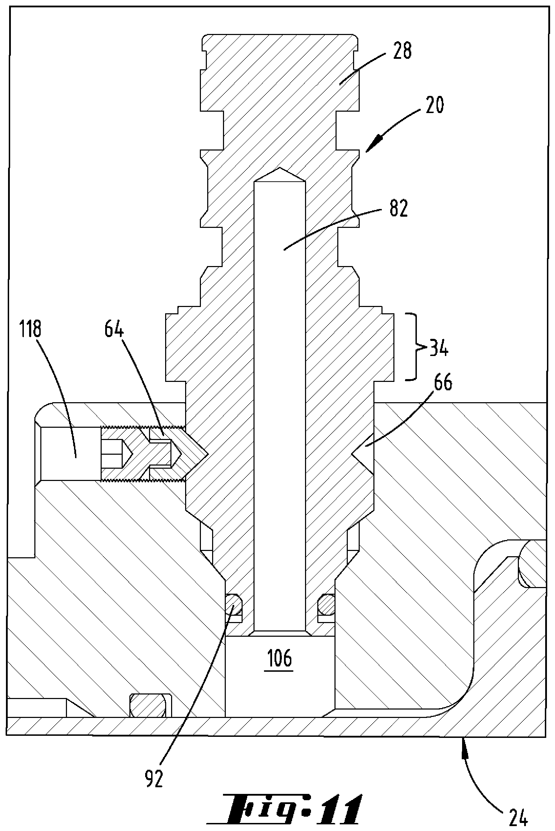

An alternate embodiment of the adaptor 20 and cylinder 24 are shown in FIGS. 9-11. The adaptor 20 and cylinder 24 are identical to that described hereinabove, except that the first wall 54 of the adaptor 20 is unthreaded and has a groove 66 provided therein which is spaced from the tool engaging portion 34 and which forms a reduced diameter wall section 66a of the wall portion 40, and the first wall section 110 of the inlet passageway 106 of the cylinder 24 is unthreaded. The groove 66 may extend around the entire perimeter of the wall 54 or may extend around a portion of the perimeter of the wall 54. The reduced diameter wall section 66a defines a diameter which is less than the diameter of the wall 54. The fastener 64 seats within the groove 66 to form the lock between the adaptor 20 and the cylinder 24. The groove 66 may be formed by machining. In this embodiment, the load caused by pressure pushing the adaptor 20 relative to the cylinder 24 the load is transferred to the adapter 20, which then transfers the load to the fastener 64, which transfers the load back to the cylinder 24.

While particular embodiments are illustrated in and described with respect to the drawings, it is envisioned that those skilled in the art may devise various modifications without departing from the scope of the appended claims. It will therefore be appreciated that the scope of the disclosure and the appended claims is not limited to the specific embodiments illustrated in and discussed with respect to the drawings and that modifications and other embodiments are possible. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the disclosure and the appended claims.

## Claims

1. An assembly comprising:
a cylinder (24) having a body (104) with a wall forming a fluid inlet passageway (106) and a wall forming at least one fastener receiving passageway (118), the fastener receiving passageway being in communication with the fluid inlet passageway;
an adaptor (20) comprising a wall (28) having a proximal end and a distal end, the wall including a first portion (32) adapted to mount to an associated source of a fluid medium and extending from the proximal end, a second portion (34) adapted to be engaged with an associated tool which can apply a torque to the adaptor, the second portion (34) extending from the first portion, a third portion (36) extending from the second portion (34), the third portion (36) seated within the fluid inlet passageway of the cylinder (24) and sealed to the wall forming the fluid inlet passageway by a seal, and a fluid passageway (81) extending through the adaptor and in communication with the fluid inlet passageway of the cylinder; and
a fastener (64) mounted in the fastener receiving passageway (118) and in engagement with the third portion (36) of the adaptor (20), the seal being distal to the fastener (64), wherein the the fluid passageway (81) of the adaptor (20) has a first part (82) and a second part (84), the first part (82) has a first end (82a) and does extend along a centerline (29) of the adaptor (20), **characterized in that** the first end (82a) is within a second reduced diameter wall section (46a) of the first portion (32) which is a fluid channel mounting portion, and spaced from the proximal end (30) of the adaptor, that the the fluid passageway (81) of the adaptor (20) extends through the second portion (34) and through the third portion (36), that the the fluid passageway (81) of the adaptor (20) terminates at a second end (82b) which is at a second end (38) of the adaptor (20) and that the second part (84) is in fluid communication with the first part (82) proximate to the first end (82a).

2. The assembly of claim 1, wherein a plurality of fastener receiving passageways (118) are provided and a fastener (64) extends through each fastener receiving passageway (118) and engages the third portion (36) of the adaptor (20).

3. The assembly of claim 2, wherein two of the fastener receiving passageways (118) are diametrically opposed from each other.

4. The assembly according to one of the preceding claims, wherein in at least one of the fastener receiving passageways (118) two abutting fasteners (64) are mounted.

5. The assembly according to one of the preceding claims, wherein the fastener (64) is threadedly engaged with the fastener receiving passageway (118).

6. The assembly according to one of the preceding claims, wherein the third portion (36) comprises a wall (54) having a groove (62) formed therein into which the fastener (64) is engaged and a recess formed therein which is spaced from the groove (62); and
a compression seal seated within the recess (76) which forms the seal between the third portion (36) of the adaptor (20) and the wall forming the fluid inlet passageway (106) of the cylinder.

7. The assembly according to claim 6, wherein the third portion (36) further comprises a first cylindrical wall (54) having a first diameter and extending from the second portion (34), the first cylindrical wall (54) having the groove (62) formed therein, a second cylindrical wall (56) extending from the first cylindrical wall (54) and having a second diameter which is less than the first diameter, the second cylindrical wall (56) having the recess formed therein.

8. The assembly according to claim 7, further comprising at least one conical wall provided between the first and second cylindrical walls.

9. The assembly according to one of the preceding claims, further comprising threads on a portion of the wall of the third portion (36), and the groove (62) has a depth which is greater than a root depth of the threads.

10. The assembly according to one of the claims 6 to 8, wherein a portion of the wall of the third portion (36) is threaded with threads and the groove is formed by a root of adjacent threads, wherein, preferably, the wall of the third portion is unthreaded.

11. The assembly according to one of the preceding claims, further comprising a passageway through the adaptor (20) through which a fluid medium can flow.

12. The assembly according to one of the preceding claims, wherein the body (104) is formed of metal.

13. The assembly according to one of the preceding claims, wherein the wall forming the fluid inlet passageway (106) in the cylinder is threaded and the third portion (36) of the adaptor (20) has a threaded wall, the threaded wall of fluid inlet passageway (106) and the threaded wall of the third portion (36) of the adaptor (20) being interengaged.

14. The assembly according to one of the preceding claims wherein the wall forming the fluid inlet passageway (106) in the cylinder is unthreaded and the third portion (36) of the adaptor (20) is unthreaded.

15. The assembly according to one of the preceding claims, further comprising a fluid channel engaged with the first portion (32) of the adaptor (20), the fluid channel capable of swiveling relative to the adaptor, wherein, preferably, the assembly is further comprising a source of fluid medium attached to the fluid channel.

## Patentansprüche

1. Eine Anordnung aufweisend:
einen Zylinder (24) mit einem Körper (104) der eine Wand aufweist, die einen Fluid-Einlassweg (106) bildet und eine Wand die zumindest einen Befestiger-Aufnahmeweg (118) ausbildet, wobei der Befestiger-Aufnahmeweg in Verbindung steht mit dem Fluid-Einlassweg;
einen Adapter (20) der eine Wand (28) aufweist die ein proximales Ende und ein distales Ende aufweist, wobei die Wand einen ersten Abschnitt (32) einschließt, der geeignet ist, zur Anbringung an einer zugeordneten Quelle von Fluidmedium und sich von dem proximalen Ende aus erstreckt, einen zweiten Abschnitt (34), der geeignet ist von einem zugeordneten Werkzeug erfasst zu werden, das ein Moment auf den Adapter ausüben kann, wobei der zweite Abschnitt (34) sich von dem ersten Abschnitt aus erstreckt, einen dritten Abschnitt (36), der sich von dem zweiten Abschnitt (34) aus erstreckt, wobei der dritte Abschnitt (36) in dem Fluid-Einlassweg des Zylinders (24) angeordnet ist und zu der Wand, die den Fluid-Einlassweg bildet, durch eine Dichtung abgedichtet ist, und eine Fluid-Durchgangsleitung (81),
die sich durch den Adapter und in Verbindung mit dem Fluid-Einlassweg des Zylinders erstreckt; und
einen Befestiger (64), der in einem Befestiger-Aufnahmeabschnitt (118) und in Zusammenwirkung mit dem dritten Abschnitt (36) des Adapters (20) ist, wobei die Dichtung distal zu dem Befestiger (64) ist, wobei die Fluid-Durchgangsleitung (81) des Adapters (20) einen ersten Teil (82) und einen zweiten Teil (84) aufweist, wobei der erste Teil (82) ein erstes Ende (82a) aufweist und sich entlang einer Mittellinie (29) des Adapters (20) erstreckt, **dadurch gekennzeichnet, dass** das erste Ende (82a) sich in einem zweiten Wandabschnitt (46a) verminderten Durchmessers des ersten Abschnitts (32) befindet, der ein Fluidkanal-Anbringungsbereich ist, und beanstandet ist zu dem proximalen Ende (30) des Adapters, dass die Fluid-Durchgangsleitung (81) des Adapters (20) sich durch den zweiten Abschnitt (34) und den dritten Abschnitt (36) erstreckt, dass die Fluid-Durchgangsleitung (81) des Adapters (20) an einem zweiten Ende (82b) endet, welches das zweite Ende (38) des Adapters (20) ist, und dass der zweite Teil (34) in Fluidverbindung mit dem ersten Teil (82) ist, nahe dem ersten Ende (82a).

2. Anordnung nach Anspruch 1, wobei eine Mehrzahl von Befestiger-Aufnahmewegen (118) vorgesehen sind und ein Befestiger (64) sich durch jeden Befestiger-Aufnahmeweg (118) erstreckt und mit dem dritten Abschnitt (36) des Adapters (20) zusammenwirkt.

3. Anordnung nach Anspruch 2, wobei zwei Befestiger-Aufnahmewege (118) diametral entgegengesetzt zueinander vorgesehen sind.

4. Anordnung nach einem der vorhergehenden Ansprüche, wobei in zumindest einem der Befestiger-Aufnahmewege (118) zwei anstoßende Befestiger (64) angebracht sind.

5. Anordnung nach einem der vorhergehenden Ansprüche, wobei die Befestiger (64) gewindemäßig mit dem Befestiger-Aufnahmeweg (118) zusammenwirken.

6. Anordnung nach einem der vorhergehenden Ansprüche, wobei der dritte Abschnitt (36) eine Wand (54) aufweist die eine darin ausgebildete Nut (62) besitzt, mit welcher der Befestiger (64) zusammenwirkt, und einen darin ausgebildeten Rücksprung, der von der Nut (62) beanstandet ist, und
eine Druckdichtung, die in dem Rücksprung (76) aufgenommen ist, die eine Abdichtung zwischen dem dritten Abschnitt (36) des Adapters (20) und der Wand bildet, welche den Fluid-Einlassweg (106) des Zylinders bildet.

7. Anordnung nach Anspruch 6, wobei der dritte Abschnitt (36) weiter eine erste zylindrische Wand (54) aufweist, die einen ersten Durchmesser aufweist und sich von dem zweiten Abschnitt (34) aus erstreckt, wobei die zylindrische Wand (54) die Nut (62), die darin ausgebildet ist, aufweist, eine zweite zylindrische Wand (56), die sich von der ersten zylindrischen Wand (54) erstreckt und einen zweiten Durchmesser aufweist, der geringer ist als der erste Durchmesser, wobei die zweite zylindrische Wand (56) den darin ausgebildeten Rücksprung aufweist.

8. Anordnung nach Anspruch 7, weiter aufweisend zumindest eine konische Wand, die zwischen der ersten und der zweiten zylindrischen Wand vorgesehen ist.

9. Anordnung nach einem der vorhergehenden Ansprüche, weiter aufweisend Gewinde an einem Abschnitt der Wand des dritten Abschnitts (36), und eine Nut (62) welche eine Tiefe aufweist die größer ist als eine Fußtiefe der Gewinde.

10. Anordnung nach einem der Ansprüche 6 bis 8, wobei ein Abschnitt der Wand des dritten Abschnitts (36) mit einem Gewinde versehen ist und die Nut durch einen Fußbereich der angrenzenden Gewinde gebildet ist, wobei, bevorzugt, die Wand des dritten Abschnitts gewindefrei ist.

11. Anordnung nach einem der vorhergehenden Ansprüche, weiter aufweisend einen Durchgangsweg durch den Adapter (20) durch welchen Fluidmedium strömen kann.

12. Anordnung nach einem der vorhergehenden Ansprüche, wobei der Körper (104) aus Metall gebildet ist.

13. Anordnung nach einem der vorhergehenden Ansprüche, wobei die Wand, welche den Fluid-Einlassweg (106) in dem Zylinder bildet, mit einem Gewinde versehen ist und der dritte Abschnitt (36) des Adapters eine mit Gewinde versehene Wand aufweist, wobei die mit Gewinde versehene Wand des Fluid-Einlassweges (106) und die mit Gewinde versehene Wand des dritten Abschnitts (36) des Adapters (20) zusammenwirken.

14. Anordnung nach einem der vorhergehenden Ansprüche, wobei die Wand, welche den Fluid-Einlassweg (106) in dem Zylinder bildet, und der dritte Abschnitt (36) des Adapters (20) gewindefrei sind.

15. Anordnung nach einem der vorhergehenden Ansprüche, weiter aufweisend einen Fluidkanal, der mit dem ersten Abschnitt (32) des Adapters (20) zusammenwirkt, wobei der Fluidkanal geeignet ist relativ zu dem Adapter zu verschwenken, wobei, vorzugsweise, die Anordnung weiter eine Quelle für Fluidmedium aufweist, angebracht an dem Fluidkanal.

## Revendications

1. Un ensemble comprenant :
un cylindre (24) ayant un corps (104) avec une paroi formant un passage d'entrée de fluide (106) et une paroi formant au moins un passage de réception d'élément de fixation (118), le passage de réception d'élément de fixation étant en communication avec le passage d'entrée de fluide ;
un adaptateur (20) comprenant une paroi (28) ayant une extrémité proximale et une extrémité distale, la paroi comprenant une première partie (32) adaptée pour être montée à une source associée d'un agent fluide et s'étendant depuis l'extrémité proximale, une deuxième partie (34) adaptée pour être engagée avec un outil associé qui peut appliquer un couple à l'adaptateur, la deuxième partie (34) s'étendant à partir de la première partie, une troisième partie (36) s'étendant à partir de la deuxième partie (34), la troisième partie (36) étant placée dans le passage d'entrée de fluide du cylindre (24) et jointe de manière étanche à la paroi formant le passage d'entrée de fluide par un joint, et un passage de fluide (81) s'étendant à travers l'adaptateur et en communication avec le passage d'entrée de fluide du cylindre ; et
un élément de fixation (64) monté dans le passage de réception d'élément de fixation (118) et en engagement avec la troisième partie (36) de l'adaptateur (20), le joint étant distal par rapport à l'élément de fixation (64),
dans lequel le passage de fluide (81) de l'adaptateur (20) a une première partie (82) et une deuxième partie (84), la première partie (82) a une première extrémité (82a) et s'étend le long d'une ligne centrale (29) de l'adaptateur (20), **caractérisé en ce que** la première extrémité (82a) est située dans une deuxième section de paroi de diamètre réduit (46a) de la première partie (32) qui est une partie de montage de conduit de fluide, et espacée de l'extrémité proximale (30) de l'adaptateur, que le passage de fluide (81) de l'adaptateur (20) s'étend à travers la deuxième partie (34) et à travers la troisième partie (36), que le passage de fluide (81) de l'adaptateur (20) se termine à une deuxième extrémité (82b) qui est à une deuxième extrémité (38) de l'adaptateur (20) et que la deuxième partie (84) est en communication de fluide avec la première partie (82) à proximité de la première extrémité (82a).

2. L'ensemble selon la revendication 1, dans lequel une pluralité de passages de réception d'éléments de fixation (118) sont prévus et un élément de fixation (64) s'étend à travers chaque passage de réception d'élément de fixation (118) et engage la troisième partie (36) de l'adaptateur (20).

3. L'ensemble de la revendication 2, dans lequel deux des passages de réception d'éléments de fixation (118) sont diamétralement opposés l'un à l'autre.

4. L'ensemble selon l'une des revendications précédentes, dans lequel dans au moins un des passages de réception d'éléments de fixation (118) sont montés deux éléments de fixation (64) placés l'un contre l'autre.

5. L'ensemble selon l'une des revendications précédentes, dans lequel l'élément de fixation (64) est engagé de manière filetée dans le passage de réception d'élément de fixation (118).

6. L'ensemble selon l'une des revendications précédentes, dans lequel la troisième partie (36) comprend une paroi (54) dans laquelle est formée une rainure (62) dans laquelle l'élément de fixation (64) est engagé et un évidement formé dans celle-ci qui est espacé de la rainure (62) ; et
un joint de compression placé dans l'évidement (76) qui forme le joint entre la troisième partie (36) de l'adaptateur (20) et la paroi formant le passage d'entrée de fluide (106) du cylindre.

7. L'ensemble selon la revendication 6, dans lequel la troisième partie (36) comprend en outre une première paroi cylindrique (54) ayant un premier diamètre et s'étendant à partir de la deuxième partie (34), la première paroi cylindrique (54) ayant la rainure (62) formée dans celle-ci, une deuxième paroi cylindrique (56) s'étendant à partir de la première paroi cylindrique (54) et ayant un deuxième diamètre qui est inférieur au premier diamètre, la deuxième paroi cylindrique (56) ayant l'évidement formé dans celle-ci.

8. L'ensemble selon la revendication 7, comprenant en outre au moins une paroi conique prévue entre les première et deuxième parois cylindriques.

9. L'ensemble selon l'une des revendications précédentes, comprenant en outre des filets sur une partie de la paroi de la troisième partie (36), et la rainure (62) a une profondeur qui est supérieure à une profondeur de fond des filets.

10. L'ensemble selon l'une des revendications 6 à 8, dans lequel une partie de la paroi de la troisième partie (36) est filetée avec des filets et la rainure est formée par un fond de filets adjacents, dans lequel, de préférence, la paroi de la troisième partie n'est pas filetée.

11. L'ensemble selon l'une des revendications précédentes, comprenant en outre un passage dans l'adaptateur (20) à travers lequel un agent fluide peut s'écouler.

12. L'ensemble selon l'une des revendications précédentes, dans lequel le corps (104) est formé de métal.

13. L'ensemble selon l'une des revendications précédentes, dans lequel la paroi formant le passage d'entrée de fluide (106) dans le cylindre est filetée et la troisième partie (36) de l'adaptateur (20) a une paroi filetée, la paroi filetée du passage d'entrée de fluide (106) et la paroi filetée de la troisième partie (36) de l'adaptateur (20) étant en prise mutuelle.

14. L'ensemble selon l'une des revendications précédentes, dans lequel la paroi formant le passage d'entrée de fluide (106) dans le cylindre est non filetée et la troisième partie (36) de l'adaptateur (20) est non filetée.

15. L'ensemble selon l'une des revendications précédentes, comprenant en outre un conduit de fluide engagé avec la première partie (32) de l'adaptateur (20), le conduit de fluide étant capable de pivoter par rapport à l'adaptateur, dans lequel, de préférence, l'ensemble comprend en outre une source d'agent fluide attachée au conduit de fluide.
